# EUROPÄISCHE PATENTANMELDUNG

(11) **EP 4 464 148 A2**
(43) Veröffentlichungstag der Anmeldung: **20.11.2024**
(21) Anmeldenummer: 24152202.8
(22) Anmeldetag: 16.01.2024
(51) Int. Cl.: A01D 41/127, G06Q 50/02

(54) **VERFAHREN ZUR ABSICHERUNG DER QUALITÄT VON SILAGE**

(30) Priorität: 01.03.2023 DE 102023104988
(71) Anmelder: CLAAS Saulgau GmbH, 88340 Bad Saulgau (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE); Monkenbusch, Robin, 33378 Rheda-Wiedenbrück (DE)
(74) Vertreter: Budach, Steffen

(57) **Zusammenfassung**

Die vorliegende Erfindung betrifft ein Verfahren zur Absicherung der Qualität von Silage mittels eines Assistenzsystems (11). Das Verfahren ist durch die Verfahrensschritte a) Vorgeben mindestens eines Silagequalitätsparameters durch eine Bedienperson (15), b) Ermitteln von durchzuführenden Prozessschritten (2) einer Futterernteprozesskette (9) zur Herstellung von Silage mit dem mindestens einen vorgegebenen Silagequalitätsparameter und c) Erzeugen von Anweisungen betreffend die durchzuführenden Prozessschritte (2) zur Herstellung der Silage mit dem mindestens einen vorgegebenen Silagequalitätsparameter gekennzeichnet. Das Ermitteln der durchzuführenden Prozessschritte (2) zur Herstellung der Silage mit dem mindestens einen vorgegebenen Silagequalitätsparameter basiert auf einem Silageherstellungsmodell (18). Das Silageherstellungsmodell (18) definiert eine Abhängigkeit des mindestens einen vorgegebenen Silagequalitätsparameters von mindestens einem die Herstellung der Silage mit dem mindestens einen vorgegeben Silagequalitätsparameter beeinflussenden Prozessparameter (17).

## Beschreibung

Die vorliegende Erfindung betrifft ein Verfahren zur Absicherung der Qualität von Silage gemäß dem Oberbegriff des unabhängigen Patentanspruchs 1 sowie ein Assistenzsystem zur Durchführung des erfindungsgemäßen Verfahrens gemäß dem Oberbegriff des unabhängigen Patentanspruchs 17.

Ein Futterernteprozess zeichnet sich durch verschiedene Prozessschritte aus, die abhängig vom Erntegut sowie von Umgebungsbedingungen variieren können. Übliche Prozessschritte eines Futterernteprozesses sind beispielsweise ein Mähen, ein Aufbereiten, ein Wenden oder Zetten, ein Schwaden, eine Schwadernte, ein Transportieren und/oder ein Einsilieren von Erntegut, wobei die einzelnen Prozessschritte bedarfsweise, abhängig vom Erntegut sowie von Umgebungsbedingungen, aufeinanderfolgen können. Die Summe derjeweils aufeinanderfolgenden Prozessschritte eines spezifischen Futterernteprozesses wird auch als Futterernteprozesskette bezeichnet. Eine Herausforderung bei der Planung eines Futterernteprozesses bzw. einer Futterernteprozesskette mit dem Ziel Erntegut bzw. Futtermittel mit einer gewünschten Qualität zu erzeugen stellt die Änderung dieser Bedingungen entlang des Futterernteprozesses dar.

Die Milch- und Viehwirtschaft, insbesondere die Qualität und Profitabilität der Produkte, ist stark abhängig von der Qualität des im Rahmen des Futterernteprozesses erzeugten Ernteguts bzw. Futtermittels. In diesem Zusammenhang ist die Futtermittelkonservierung von wesentlicher Bedeutung, da hierdurch vorhandene landwirtschaftliche Flächen effizienter genutzt werden können und Erntegut bzw. Futtermittel über Zeiträume hinweg eingelagert werden kann, in denen der Ertrag geringer ausfällt als üblich bzw. nötig. Für die Konservierung von Erntegut bzw. Futtermittel, also zur Herstellung sogenannter Silage, nutzt man den biologischen Prozess der Vergärung. Dieser im Rahmen der Futtermittelproduktion als Silage- bzw. Silierprozess bekannte Vergärungsprozess stellt sicher, dass Gras oder Pflanzen, wie Mais, Klee, Luzerne oder andere Getreide als ganze Pflanze, konserviert werden und als Futtermittel in der Milch- und Viehwirtschaft oder aber als Rohstoff für Biogasanlagen eingesetzt werden können.

Wesentlich für die Herstellung von Silage ist dabei eine hohe Silagequalität, da die Silagequalität wesentlichen Einfluss auf den Ertrag und die Profitabilität der Milch- und Viehwirtschaft oder einer Biogasanlage hat. Weist die Silage beispielsweise nicht die gewünschte hohe Silagequalität auf, ist der Landwirt unter Umständen dazu gezwungen Futtermittel zu zukaufen, um die Nährstoffaufnahme seiner Tiere sicherzustellen.

Der Silage- bzw. Silierprozess ist ein hochsensibler biologischer Prozess, dessen Ergebnis stark von den vorherrschenden Rahmenbedingungen abhängt. Zu feuchtes Erntegut oder verunreinigtes Erntegut hat erhebliche Auswirkungen auf die Bildung von Milchsäure während des Silage- bzw. Silierprozesses, was zu Energieverlusten und/oder der Bildung von Schimmelpilzen führen kann, wodurch der Ertrag und im schlimmsten Fall die Gesundheit der Tiere leidet. Wesentlich für den Erhalt von Silage mit einer hohen Silagequalität ist es somit den Futterernteprozess bzw. die Futterernteprozesskette präzise zu planen, kontinuierlich zu überwachen und Anpassungen in Abhängigkeit von sich ändernden Bedingungen vorzunehmen.

Eine für Silage relevante Qualitätsgröße ist beispielsweise der Trockensubstanzgehalt des Ernteguts. Aus der DE 20 2019 001 404 U1 ist beispielsweise bekannt, die Aufbereitungsintensität von landwirtschaftlichen Früchten zu regeln, um einen möglichst konstanten Trockenmasse- bzw. Trockensubstanzgehalt von Erntegut zu erzielen.

Aus der EP 3 315 014 A1 ist weiterhin bekannt das Trocknungsverhalten von Erntegut auf Basis eines Trocknungswertes vorherzusagen und hieraus einen empfohlenen Erntezeitpunkt zu bestimmen.

Der Trockensubstanzgehalt von Erntegut und die Betrachtung eines einzelnen Prozessschrittes des Futterernteprozesses bzw. der Futterernteprozesskette ist für den Erhalt von Silage mit einer vorgegebenen bzw. gewünschten Silagequalität allerdings nicht hinreichend. Der Silier- bzw. Silageprozess ist vielmehr von verschiedensten Bedingungen und Parametern abhängig zwischen denen komplexe Zusammenhänge und Abhängigkeiten bestehen. Diese Bedingungen und Parameter können sich wie bereits angedeutet kontinuierlich verändern.

Ausgehend hiervon ist es demnach die Aufgabe der vorliegenden Erfindung die beschriebenen Nachteile des Standes der Technik auszuräumen und insbesondere ein Verfahren anzugeben, welches die Abhängigkeit der Silagequalität von verschiedenen veränderlichen Bedingungen und Parametern berücksichtig und sicherstellt, dass eine Futterernteprozesskette abgearbeitet wird, die zu qualitativ hochwertiger, insbesondere einen hohen Energiegehalt aufweisender, den Wünschen eines Landwirts entsprechender Silage führt.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 16 sind.

Demnach betrifft die vorliegende Erfindung ein Verfahren zur Absicherung der Qualität von Silage mittels eines Assistenzsystems, welches eine Ein-Ausgabeeinheit, eine Recheneinheit und eine Speichereinheit umfasst, die gemeinsam ein Netzwerk zur Übertragung von Daten ausbilden. Das Verfahren ist durch die Verfahrensschritte
a) mittels der Ein-Ausgabeeinheit, Vorgeben mindestens eines Silagequalitätsparameters durch eine Bedienperson;
b) mittels der Recheneinheit, Ermitteln von durchzuführenden Prozessschritten einer Futterernteprozesskette zur Herstellung von Silage mit dem mindestens einen vorgegebenen Silagequalitätsparameter; und
c) mittels der Recheneinheit, Erzeugen von Anweisungen betreffend die durchzuführenden Prozessschritte zur Herstellung der Silage mit dem mindestens einen vorgegebenen Silagequalitätsparameter,
gekennzeichnet. Das Ermitteln der durchzuführenden Prozessschritte zur Herstellung der Silage mit dem mindestens einen vorgegebenen Silagequalitätsparameter basiert auf einem Silageherstellungsmodell, welches in der Speichereinheit hinterlegt ist, wobei das Silageherstellungsmodell eine Abhängigkeit des mindestens einen vorgegebenen Silagequalitätsparameters von mindestens einem die Herstellung der Silage mit dem mindestens einen vorgegeben Silagequalitätsparameter beeinflussenden Prozessparameter definiert.

Das erfindungsgemäße Verfahren erlaubt es, eine ideale Futterernteprozesskette zu definieren, die sicherstellt, dass Silage mit einer spezifisch definierten Qualität abhängig von vorliegenden Randbedingungen als Ergebnis eines Futterernteprozesses erhalten wird. Die Nutzung eines Silageherstellungsmodells als Basis für die Bestimmung der idealen Futterernteprozesskette gewährleistet, dass die komplexen Abhängigkeiten verschiedener Prozessparameter voneinander sowie hinsichtlich des oder der verschiedenen vorgegebenen Silagequalitätsparameter der Realität entsprechend modelliert werden. So werden beispielsweise für den Erhalt der Silage mit der gewünschten Qualität erforderliche Pufferkapazitäten, optimierte Erntezeitpunkte sowie die Zugabe Siliermittel bestimmt bzw. berücksichtigt, um die für den Silier- bzw. Silageprozess erforderliche Milchsäurebildung unter Berücksichtigung der vorliegenden Randbedingungen und Zielsetzungen abzusichern. Die Bedienperson bzw. der Landwirt wird erheblich entlastet, da die Planung einer Futterernteprozesskette mittels des Assistenzsystems erfolgt und auch eine Anpassung vom Assistenzsystem vorgenommen wird, sofern sich Parameter, also Randbedingungen, während des Ablaufs des Futterernteprozesses verändern und dies stets unter der Prämisse die von der Bedienperson bzw. vom Landwirt definierten Qualitätsparameter zu erreichen.

Gemäß einer vorteilhaften Weiterbildung der Erfindung ist vorgesehen, dass der Verfahrensschritt b) das Ermitteln einer Reihenfolge der durchzuführenden Prozessschritte, eines Beginn- sowie Endzeitpunkts für die Durchführung der Prozessschritte, einer Dauer zwischen den durchzuführenden Prozessschritten, eines oder mehrerer für die Durchführung der Prozessschritte benötigten Prozessteilnehmer, einer oder mehrerer für die Durchführung der Prozessschritte benötigter Prozessressourcen und/oder von Einstellungen und/oder Mengen der einen oder mehreren für die Durchführung der Prozessschritte benötigten Prozessteilnehmer und/oder Prozessressourcen umfasst.

Gemäß einer vorteilhaften Weiterbildung der Erfindung ist vorgesehen, dass der Verfahrensschritt c) das Erzeugen von Anweisungen betreffend die Reihenfolge der durchzuführenden Prozessschritte, den Beginn- sowie Endzeitpunkt für die Durchführung der Prozessschritte, die Dauer zwischen den durchzuführenden Prozessschritten, den einen oder die mehreren für die Durchführung der Prozessschritte benötigten Prozessteilnehmer, die eine oder die mehreren für die Durchführung der Prozessschritte benötigten Prozessressourcen und/oder die Einstellungen und/oder die Mengen der einen oder mehreren für die Durchführung der Prozessschritte benötigten Prozessteilnehmer und/oder Prozessressourcen umfasst.

Vorzugsweise ist vorgesehen, dass die eine oder die mehreren benötigten Prozessteilnehmer landwirtschaftliche Maschinenanordnungen, insbesondere Gespanne aus landwirtschaftlichem Zugfahrzeug und adaptierten Anbaugerät, landwirtschaftliche Erntemaschinen oder dergleichen, sind.

Weiter vorzugsweise ist vorgesehen, dass die eine oder die mehreren benötigten Prozessressourcen Betriebsmittel sind.

Diese Ausgestaltungen ermöglichen den Futterernteprozess in seiner Gesamtheit mit allen relevanten, beeinflussbaren Prozessschritten sowie Parametern abhängig von dem oder den vorgegebenen Silagequalitätsparametern zu gestalten, um somit die auf die vorliegenden Gegebenheiten hin ideale Futterernteprozesskette zu definieren, die wiederum sicherstellt, dass die qualitativ hochwertige, für die Einlagerung geeignete und einen hohen Energiegehalt aufweisende Silage mit dem oder den Wunschqualitätsparametern am Ende des Futterernteprozesses erhalten wird.

Gemäß einer vorteilhaften Weiterbildung der Erfindung ist vorgesehen, dass der Verfahrensschritt c) ein Anzeigen der erzeugten Anweisungen mittels einer mit dem Assistenzsystem zur Übertragung von Daten kommunizierenden Anzeigeeinheit umfasst.

Ergänzend oder alternativ hierzu ist vorgesehen, dass der Verfahrensschritt c) ein Übermitteln der erzeugten Anweisungen, insbesondere von Steuersignalen und/oder Daten, an den einen oder die mehreren für die Durchführung der Prozessschritte benötigten Prozessteilnehmer umfasst.

Es besteht somit die Möglichkeit die Bedienperson in die Durchführung der verschiedenen Prozessschritte der idealen Futterernteprozesskette mit einzubinden, in dem die Bedienperson die landwirtschaftlichen Maschinenanordnungen entsprechend den Anweisungen steuert bzw. bedient. Sind die landwirtschaftliche Maschinenanordnungen hingegen befähigt, Prozessschritte oder Teilaufgaben eines Prozessschrittes selbsttätig durchzuführen, so kann durch die Fähigkeit des Assistenzsystems Steuersignale und/oder Daten an die Prozessteilnehmer zu übermitteln eine automatisierte Steuerung der landwirtschaftlichen Maschinenanordnungen realisiert werden, ohne dass die Bedienperson zwangsläufig in den Steuerprozess mit eingebunden werden muss.

Gemäß einer vorteilhaften Weiterbildung der Erfindung ist vorgesehen, dass die in dem Verfahrensschritt b) ermittelten durchzuführenden Prozessschritte die Prozessschritte Mähen, Aufbereiten, Wenden, Schwaden, Anwelken, Trocknen, Rechen, Schwadernte, Transportieren und/oder Einsilieren von Erntegut umfassen.

Alle möglichen Prozessschritte eines Futterernteprozesses können somit berücksichtigt werden und dabei abhängig von dem oder den vorgegebenen Silagequalitätsparametern zu der idealen Futterernteprozesskette für die Herstellung der Silage zusammengesetzt werden.

Gemäß einer vorteilhaften Weiterbildung der Erfindung ist vorgesehen, dass der mindestens eine Silagequalitätsparameter ein Trockensubstanzgehalt, ein Zuckergehalt, ein Stärkegehalt, ein pH-Wert, ein Rohproteingehalt, ein Rohfasergehalt, ein Rohaschegehalt, eine Energiedichte, ein Nährstoffgehalt, eine Schnittlänge und/oder ein Säuregehalt ist.

Die Bedienperson bzw. der Landwirt hat somit die Möglichkeit die für seine spezifische Nutzung wesentlichen Qualitätsparameter auszuwählen und vorzugeben, woraufhin dann eine ideale Futterernteprozesskette von der Recheneinheit des Assistenzsystems automatisch unter Berücksichtigung der geltenden Randbedingungen geplant wird.

Gemäß einer vorteilhaften Weiterbildung der Erfindung ist vorgesehen, dass der mindestens eine Prozessparameter in der Speichereinheit des Assistenzsystems hinterlegt ist.

Ergänzend oder alternativ hierzu ist vorgesehen, dass der mindestens eine Prozessparameter sensorisch erfasst wird. Die hierzu erforderliche Sensorik kann wahlweise an einer landwirtschaftlichen Maschinenanordnung angebracht und/oder eine maschinenanordnungsferne Sensorik, beispielsweise eine an einer Drohne angebrachte Sensorik, sein.

Weiterhin ist ergänzend oder alternativ hierzu vorgesehen, dass der mindestens eine Prozessparameter mittels der Recheneinheit des Assistenzsystems ermittelt wird. Es kann beispielsweise vorgesehen sein, dass verschiedene in der Speichereinheit hinterlegte Prozessparameter, die gegebenenfalls sensorisch erfasst wurden, zu einem weiteren Prozessparameter verrechnet werden oder aber das Prozessparameter im Rahmen der Ermittlung der durchzuführenden Prozessschritte unter Zugrundelegung des Silageherstellungsmodell bestimmt bzw. berechnet werden.

Gemäß einer vorteilhaften Weiterbildung der Erfindung ist vorgesehen, dass die Verfahrensschritte b) und c) bei einer Änderung des mindestens einen Silagequalitätsparameters und/oder bei einer Änderung des mindestens einen Prozessparameters erneut mittels der Recheneinheit des Assistenzsystems ausgeführt werden.

Hierdurch wird sichergestellt, dass die Futterernteprozesskette bei einer Änderung der Randbedingungen bzw. Vorgabegrößen angepasst bzw. aktualisiert wird, um zu vermeiden, dass der Futterernteprozess aufgrund falscher weiterverfolgter Prozessschritte und/oder Prozessparameter am Ende nicht zur Silage mit der gewünschten Qualität führt. Wird mittels einer Sensorik eine Änderung eines oder mehrerer Prozessparameter detektiert und/oder ändert die Bedienperson den oder die Silagequalitätsparameter führt die Recheneinheit die Anpassung durch die erneute Durchführung der Verfahrensschritte b) und c) durch. Die Bedienperson wird von einer nötigen Überwachungsfunktion entbunden, was den gesamten Futterernteprozess robuster und weniger fehleranfällig macht.

Gemäß einer vorteilhaften Weiterbildung der Erfindung ist vorgesehen, dass der mindestens eine Prozessparameter ein erntegutspezifischer Parameter, ein maschinenanordnungsspezifischer Parameter, ein betriebsmittelspezifischer Parameter und/oder ein Umweltparameter ist.

Vorzugsweise ist vorgesehen, dass der erntegutspezifische Parameter eine Erntegutsorte, einen Trockensubstanzgehalt des Ernteguts, einen Blattflächenindex des Ernteguts, einen stomatären Widerstand des Ernteguts, eine Wachsschicht des Ernteguts, eine Bestandsdichte des Ernteguts, eine Bestandshöhe des Ernteguts, eine Stoppelhöhe, eine Schwaddichte des Ernteguts, eine Schwadhöhe des Ernteguts und/oder eine Schwadbreite des Ernteguts spezifiziert.

Weiter vorzugsweise ist vorgesehen, dass der maschinenanordnungsspezifische Parameter Einstellungen von Arbeitsaggregaten von Arbeitsmaschinen und/oder Erntemaschinen, insbesondere von Traktoren, Feldhäckslern, Teleskopladern und/oder Radladern, spezifiziert.

Ergänzend oder alternativ hierzu ist vorgesehen, dass der maschinenanordnungsspezifische Parameter Einstellungen von Arbeitsaggregaten von Anbaugeräten, insbesondere von Mähwerken, Wendern, Schwadern, Pick-ups, Transportwagen und/oder Ballenpressen spezifiziert.

Weiter vorzugsweise ist vorgesehen, dass der betriebsmittelspezifische Parameter Siliermittel, Wickelmaterialien und/oder Silos spezifiziert.

Weiter vorzugsweise ist vorgesehen, dass der Umweltparameter eine Bodenart, eine Bodenfeuchte, eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung spezifiziert.

Somit können alle Parameter, die grundsätzlich für einen Futterernteprozess relevanten sind bzw. einen Futterernteprozess und dessen Ergebnis beeinflussen, bei der Definition der idealen Futterernteprozesskette mitberücksichtigt werden. Dies sorgt dafür, dass die ideale Futterernteprozesskette stets mit den realen Gegebenheiten auf einer landwirtschaftlichen Fläche in Einklang steht.

Gemäß einer vorteilhaften Weiterbildung der Erfindung ist vorgesehen, dass der Trockensubstanzgehalt des Ernteguts in Abhängigkeit eines empirischen oder physikalischen Feldtrocknungsmodells mittels der Recheneinheit des Assistenzsystems bestimmt wird.

Das Feldtrocknungsmodell definiert eine Abhängigkeit einer Trocknungsrate von Erntegut auf einer landwirtschaftlichen Fläche von mindestens einem der Prozessparameter, insbesondere von einem der erntegutspezifischen Parameter und/oder einem der Umweltparameter.

Vorzugsweise ist vorgesehen, dass das Feldtrocknungsmodell auf mindestens einer auf einer thermodynamischen Gesetzmäßigkeit beruhenden Exponentialfunktion basiert.

Das Feldtrocknungsmodell kann gemäß einer vorteilhaften Weiterbildung auch ein lernfähiges, auf künstlicher Intelligenz basierendes, Feldtrocknungsmodell sein. Vorzugsweise basiert das Feldtrocknungsmodell bei einer solchen Ausgestaltung auf künstlichen neuronalen Netzen, genetischen Algorithmen, Bayes'schen Netzen oder dergleichen, mittels derer die Abhängigkeit der Trocknungsrate von dem mindestens einen der Prozessparameter, insbesondere von dem einen der erntegutspezifischen Parameter und/oder dem einen der Umweltparameter, modelliert wird.

Derartige Feldtrocknungsmodelle gewährleisten, dass der komplexe Zusammenhang von Trocknungsrate und Prozessparameter, insbesondere erntegutspezifischen Parametern und/oder Umweltparametern, der Wirklichkeit entsprechend beschrieben werden kann, sodass zuverlässige und reproduzierbare Ergebnisse geliefert werden können, die den auf der landwirtschaftlichen Fläche vorherrschenden Zustand widerspiegeln. Weiterhin wird sichergestellt, dass ein robustes Feldtrocknungsmodell von der Recheneinheit als Grundlage für die Bestimmung des Trockensubstanzgehalts herangezogen wird.

Gemäß einer vorteilhaften Weiterbildung der Erfindung ist vorgesehen, dass der Verfahrensschritt b) mittels der Recheneinheit des Assistenzsystems unter Anwendung mindestens einer in der Speichereinheit des Assistenzsystems hinterlegten Anwendungsstrategie und/oder Optimierungsstrategie durchgeführt wird.

Vorzugsweise ist vorgesehen, dass die mindestens eine Anwendungsstrategie eine Anwendungsstrategie "Silage für Biogasgewinnung" oder eine Anwendungsstrategie "Silage für Tierfütterung", umfasst, wobei die Anwendungsstrategien "Silage für Biogasgewinnung" oder "Silage für Tierfütterung" das Ermitteln der durchzuführenden Prozessschritte abhängig von der entsprechenden Nutzung der Silage machen.

Weiter vorzugsweise ist vorgesehen, dass die mindestens eine anwendbare Optimierungsstrategie eine Optimierungsstrategie "Siliermittel" umfasst, wobei die Optimierungsstrategie "Siliermittel" die Menge an Siliermittel, die für die Herstellung der Silage mit dem vorgegebenen Silagequalitätsparameter benötigt wird, optimiert.

Durch die Vorgabe von Anwendungsstrategien und/oder Optimierungsstrategien kann der Prozess der Ermittlung einer idealen Futterernteprozesskette zielgerichteter und mit reduziertem Rechenaufwand erfolgen, da beispielsweise gewisse Prozessschritte, Prozessparameter, Prozessteilnehmer und/oder Prozessressourcen überhaupt nicht berücksichtigt werden müssen oder als fix definiert in die Betrachtung einfließen.

Gemäß einer vorteilhaften Weiterbildung der Erfindung ist vorgesehen, dass der Verfahrensschritt a) ein Vorgeben der mindestens einen Anwendungsstrategie und/oder Optimierungsstrategie durch die Bedienperson mittels der Ein-Ausgabeeinheit des Assistenzsystems umfasst.

Die Bedienperson bzw. der Landwirt hat durch die Eingabe bzw. Vorgabe von Anwendungsstrategien und/oder Optimierungsstrategien die Möglichkeit neben den Qualitätsparametern weitere Randbedingungen nach seinen Wünschen zu definieren, um die Wirtschaftlichkeit und Effizienz seiner Arbeit sicherzustellen.

Gemäß einer vorteilhaften Weiterbildung der Erfindung ist vorgesehen, dass die Verfahrensschritte b) und c) mittels der Recheneinheit des Assistenzsystems nach Verfahrensschritt a) automatisch ausgeführt werden.

Die erfindungsgemäße Aufgabe wird ferner durch ein Assistenzsystem gemäß dem unabhängigen Patentanspruch 17 gelöst.

Demnach betriff die Erfindung weiterhin ein Assistenzsystem zur Durchführung des erfindungsgemäßen Verfahrens. Das Assistenzsystem umfasst eine Ein-Ausgabeeinheit, eine Recheneinheit und eine Speichereinheit, die gemeinsam ein Netzwerk zur Übertragung von Daten ausbilden. Das Assistenzsystem ist dadurch gekennzeichnet, dass die Recheneinheit dazu eingerichtet ist, in Abhängigkeit der im Verfahrensschritt b) ermittelten durchzuführenden Prozessschritte die für die Durchführung der Prozessschritte erforderlichen landwirtschaftlichen Maschinenanordnungen, insbesondere die Fahrerassistenzsysteme der landwirtschaftlichen Maschinenanordnungen, als Prozessteilnehmer in das Netzwerk zu integrieren.

Gemäß einer vorteilhaften Weiterbildung der Erfindung ist vorgesehen, dass die für die Durchführung der Prozessschritte erforderlichen landwirtschaftliche Maschinenanordnungen als Regelautomaten, insbesondere Arbeitsmaschinenautomaten, Erntemaschinenautomaten, Mähwerkautomaten, Wenderautomaten, Schwaderautomaten, Transportfahrzeugautomaten und Ballenpressenautomaten, ausgeführt sind, wobei die Recheneinheit des Assistenzsystems dazu eingerichtet ist, die jeweiligen Regelautomaten abhängig von den durchzuführenden Prozessschritten zu steuern.

Die Merkmale der abhängigen Verfahrensansprüche sind gleichermaßen auf das erfindungsmäße Assistenzsystem übertragbar.

Die vorliegende Erfindung wird nachstehend anhand der in den Figuren abgebildeten Ausführungsformen näher beschrieben.

Es zeigen:
- FIG. 1: eine schematische und exemplarische Darstellung eines Futterernteprozesses; und

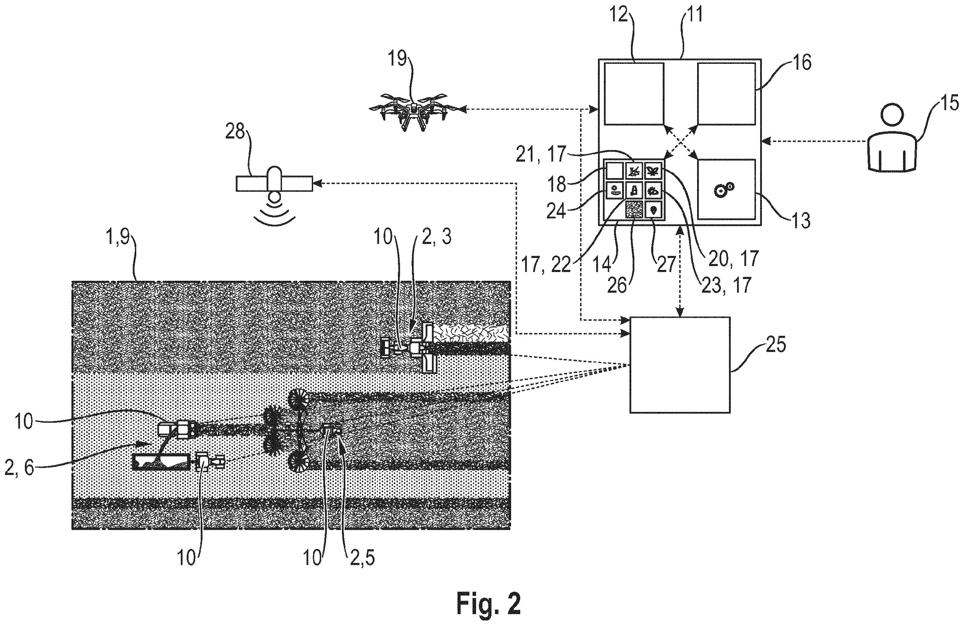

- FIG. 2: eine schematische und exemplarische Darstellung eines erfindungsgemäßen Assistenzsystems im Kontext eines Futterernteprozesses.

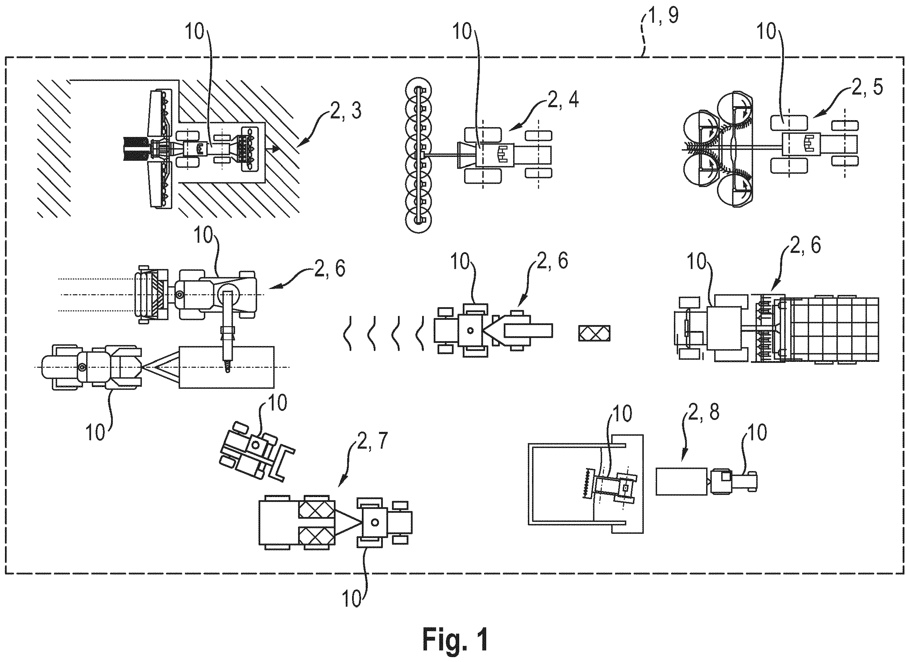

Fig. 1 zeigt schematisch und exemplarisch einen Futterernteprozess 1, wobei der dargestellte Futterernteprozess 1 eine Vielzahl an verschiedenen Prozessschritten 2 umfasst. Im Einzelnen sind in FIG. 1 als Prozessschritte 2 Mähen 3, Wenden oder Zetten 4, Schwaden 5, Schwadernte 6, Transportieren 7 und Einsilieren 8 von Erntegut abgebildet. Weitere Prozessschritte 2, die in FIG. 1 nicht abgebildet sind, wie Aufbereiten, Anwelken, Trocknen und Rechen von Erntegut sind weitere mögliche Prozessschritte 2 eines bzw. des Futterernteprozesses 1. Aus Vereinfachungsgründen sind in FIG. 1 auch alternative Prozessschritte 2 dargestellt, die sich in der Praxis wechselseitig ausschließen, etwa Schwadernte 6 mittels Feldhäcksler, mittels Ballenpresse oder mittels Ladewagen. Jeder Futterernteprozess 1 umfasst eine anwendungsfallspezifische Auswahl und Reihenfolge der zuvor aufgeführten möglichen Prozessschritte 2. Eine solche anwendungsfallspezifische Auswahl und Reihenfolge an Prozessschritten 2 wird als Futterernteprozesskette 9 bezeichnet. Zumindest einige der Prozessschritte 2 einer bzw. der Futterernteprozesskette 9 werden mittels landwirtschaftlicher Maschinenanordnungen 10 durchgeführt, die beispielsweise als Gespann aus landwirtschaftlicher Zugmaschine und adaptierten Anbaugerät oder als landwirtschaftliche Erntemaschine ausgeführt sein können. Es liegt im Rahmen der Erfindung, dass die landwirtschaftlichen Maschinenanordnungen 10 selbstfahrend ausgeführt sein können. Weiterhin liegt es im Rahmen der Erfindung, dass die landwirtschaftlichen Maschinenanordnungen 10 autonom, d.h. ohne Fahrer, den jeweiligen Prozessschritt 2 realisieren können. Die landwirtschaftlichen Maschinenanordnungen 10 umfassen hier nicht näher beschriebene Arbeitsaggregate.

In dem in FIG. 1 schematisch dargestellten Futterernteprozess 1 wird der Prozessschritt 2 Mähen 3 beispielsweise von einem Traktor mit Front- und Seitenmähwerken realisiert, wobei das Erntegut in einem einzigen Erntegutschwad abgelegt wird. Es liegt im Rahmen der Erfindung, dass das dreiteilige Mähwerk auch nur als ein- oder zweiteiliges Mähwerk ausgeführt ist und mehrere Erntegutschwaden bilden kann. Zudem kann das Erntegut im Prozessschritt 2 Mähen 3 auch in Breitablage auf der landwirtschaftlichen Fläche abgelegt werden.

Der Prozessschritt 2 Wenden oder Zetten 4 wird in dem in FIG. 1 schematisch dargestellten Futterernteprozess 1 beispielhaft mittels einer von einem Traktor gezogenen oder einer auf diesem aufgesattelten Heuwerbungsmaschine, auch als Wender oder Zetter bezeichnet, umgesetzt. Dieser Prozessschritt 2 ist dem Prozessschritt Mähen 3 nachgeordnet, wobei in diesem Fall im Prozessschritt 2 Mähen 3 das Erntegut in Breitablage abgelegt wird. Der Prozessschritt 2 Wenden oder Zetten 4 wird in Abhängigkeit von der Feuchte des in Breitablage abgelegten Erntegutes ein oder mehrmals durchgeführt.

Wurde das Erntegut in Breitablage auf der landwirtschaftlichen Fläche abgelegt, umfasst die Futterernteprozesskette 9 den Prozessschritt 2 Schwaden 5. Der Prozessschritt 2 Schwaden 5 wird in dem in FIG. 1 schematisch dargestellten Futterernteprozess 1 beispielshaft von einem Traktor-Schwader-Gespann realisiert, wobei der Schwader als Vierkreiselschwader ausgeführt ist und das Erntegut in einem einzigen Erntegutschwad ablegt wird. Denkbar ist hier aber auch der Einsatz von Ein- oder Mehrkreiselschwadern, welche das Erntegut in einem oder mehreren Erntegutschwaden auf der landwirtschaftlichen Fläche ablegen.

Der Erntegutschwad wird in dem in FIG. 1 schematisch dargestellten Futterernteprozess 1 im Prozessschritt Schwadernte 6 beispielhaft von einem Feldhäcksler aufgenommen, in an sich bekannter Weise zerkleinert und an einen von einem Traktor gezogenen Transportwagen übergeben. Alternativ kann der Erntegutschwad von einem von einem Traktor gezogenen Ladewagen aufgenommen werden. Ladewagen sind in der Regel mit einer als Pickup ausgeführten Aufsammeleinrichtung ausgestattet, können je nach Ausstattung eine Zerkleinerung des aufgenommenen Ernteguts vornehmen und dieses sodann in gewissem Umfang vorverdichtet an den eigentlichen Transportbehälter übergeben. Eine weiter Alternative kann die Aufnahme des Erntegutschwads durch eine von einem Traktor gezogene Ballenpresse, hier vorzugsweise als sogenannte Quaderballenpresse ausgeführte Ballenpresse, sein, wobei das Erntegut sodann als Erntegutballen auf der landwirtschaftlichen Fläche abgelegt wird.

An den Prozessschritt 2 Schwadernte 6 schließt sich in der Regel der Prozessschritt 2 Transportieren 7 des Ernteguts an. Sofern das Erntegut in Form eines Erntegutballens vorliegt, kommen hier in der Regel von Traktoren gezogene Pritschenwagen und Hubstapler, etwa Traktoren mit Frontlader oder sogenannte Teleskoplader, zum Aufnehmen und Überladen der Erntegutballen zum Einsatz. Wird das Erntegut an einen Transportwagen übergeben oder von einem Ladewagen aufgenommen erfolgt der Transport des Ernteguts in der Regel auch in diesem.

Der Prozessschritt 2 Einsilieren 8 des Erntegutes kann einerseits die Einlagerung der Erntegutballen umfassen. Andererseits kann das etwa von einem Transportwagen oder einem Ladewagen aufgenommene Erntegut in einem Silo eingelagert werden, wobei in FIG. 1 beispielhaft ein Flachsilo dargestellt ist. Die Einlagerung des Erntegutes in einem Flachsilo erfolgt in der Regel in der Weise, dass der von dem Traktor gezogene Lade- oder Transportwagen das Erntegut in das Silo abgibt und dort ein Verdichtungsfahrzeug das Erntegut in an sich bekannter Weise durch mehrmaliges Überrollen und Zusammenschieben verdichtet. Hierdurch wird die eingangs beschriebene Silage als Ergebnis des Futterernteprozesses 1 bzw. der Futterernteprozesskette 9 erhalten.

Der Futterernteprozess 1 setzt sich folglich aus dem Zusammenspiel des zu erntenden Erntegutes mit den die Futterernteprozesskette 9 bildenden Prozessschritten 2 und der bzw. den jeweils diesen Prozessschritten 2 zugeordneten erforderlichen landwirtschaftlichen Maschinenanordnungen 10 zusammen.

Wesentlich bei der Produktion von Silage als Ergebnis eines zuvor beispielhaft beschriebenen Futterernteprozesses 1 bzw. einer Abarbeitung einer Futterernteprozesskette 9 ist, wie eingangs beschrieben, das Sicherstellen einer spezifischen Silagequalität. Nur durch das Sicherstellen der Silagequalität kann ein qualitativ hochwertiges, insbesondere einen hohen Energiegehalt aufweisendes, den Anforderungen eines Landwirts entsprechendes Erntegut bzw. Futtermittel erzeugt werden, welches für den Einsatz in der Milch- und Viehwirtschaft oder in einer Biogasanlage geeignet ist.

Um dies sicherzustellen, wird erfindungsgemäß ein Verfahren zur Absicherung der Qualität von Silage vorgeschlagen. Dieses Verfahren wird mittels eines Assistenzsystems 11 aus- bzw. durchgeführt. Das Assistenzsystem 11 verfügt über bzw. umfasst eine Ein-Ausgabeeinheit 12, eine Recheneinheit 13 und eine Speichereinheit 14, die gemeinsam ein Netzwerk zur Übertragung von Daten ausbilden. Mit anderen Worten, die Ein-Ausgabeeinheit 12, die Recheneinheit 13 und die Speichereinheit 14 des Assistenzsystems 11 kommunizieren miteinander zur Übertragung von Daten. Das Assistenzsystem 11 kann beispielsweise ein übergeordnetes Farmmanagementsystem ausbilden bzw. Teil eines solchen Fahrmanagementsystems sein, welches eine Bedienperson 15 zu Planungs-, Dokumentations- und/oder Abrechnungszwecken eines Futterernteprozesses 1 bzw. Futterernteprozesskette 9 nutzt. Weiterhin kann eine Anzeigeeinheit 16 vorgesehen sein, die Teil des Netzwerks zu Übertragung von Daten ist, also ebenfalls mit dem Assistenzsystem 11 bzw. der Ein-Ausgabeeinheit 12, der Recheneinheit 13 und der Speichereinheit 14 zur Übertragung von Daten kommuniziert. Die Anzeigeeinheit 16 kann Teil des Assistenzsystems 11, gleichermaßen aber auch Teil eines Fahrerassistenzsystems 16 einer landwirtschaftlichen Maschinenanordnung 10 oder aber Teil eines mobilen Endgeräts, beispielsweise eines Smartphones oder eines Tablets, sein. Es ist genauso gut vorstellbar, dass das Assistenzsystem 11, landwirtschaftliche Maschinenanordnungen 10 und auch mobile Endgeräte über eigene Anzeigeeinheiten 16 verfügen.

Für die Silageproduktion ist es unabdingbar, dass nur die Prozessschritte 2 und diese auch nur in entsprechendem Maße durchgeführt werden, die wirklich erforderlich sind, um eine gewünschte Silagequalität zu erreichen. Unnötige oder fehlende Prozessschritte 2 und/oder die Durchführung von Prozessschritten 2 mit fehlerhaften Prozessparametern 17 führt dazu, dass am Ende des Futterernteprozesses 1 bzw. der Futterernteprozesskette 9 zwar Silage als Produkt erhalten wird, dieses allerdings für die Nutzung in der Milch- und Viehwirtschaft oder in der Biogasanlage unbrauchbar ist. Die Planung einer solchen Futterernteprozesskette 9 sowie die ständige Überwachung von Prozessparametern 17 ist für einen Landwirt höchst komplex. Eine Fehlplanung und/oder Fehler bei der Überwachung des Futterernteprozesses 1 können die Wirtschaftlichkeit und Effizienz hemmen, im schlimmsten Fall die Arbeit gänzlich unwirtschaftlich werden lassen. Das erfindungsgemäße Verfahren zur Absicherung der Qualität von Silage setzt hier an und unterstützt den Landwirt bzw. die Bedienperson 15 bei der Planung und Durchführung eines idealen Futterernteprozesses 1 bzw. einer idealen Futterernteprozesskette 9 zur Herstellung von Silage einer bestimmten, vorgegebenen Qualität.

Mittels der Ein-Ausgabeeinheit 12 des Assistenzsystems 11 gibt die Bedienperson 15 mindestens einen Silagequalitätsparameter vor, der die Qualität der bei der Abarbeitung der Futterernteprozesskette 9 entstehenden Silage definiert. Der Silagequalitätsparameters kann ein zu erzielender Trockensubstanzgehalt, ein Zuckergehalt, ein Stärkegehalt, ein pH-Wert, eine Rohproteingehalt, eine Rohfasergehalt, ein Rohaschegehalt, eine Energiedichte, ein Nährstoffgehalt, eine Schnittlänge und/oder ein Säuregehalt der Silage sein.

Die Recheneinheit 13 des Assistenzsystems 11 ermittelt nach der Vorgabe des mindestens einen Silagequalitätsparameters durchzuführende Prozessschritte 2, die erforderlich sind Silage mit dem oder den vorgegebenen Silagequalitätsparametern zu erhalten. Die mittels der Recheneinheit 13 des Assistenzsystem 11 ermittelten durchzuführenden Prozessschritte 2 können die Prozessschritte 2 Mähen 3, Aufbereiten, Wenden 4, Schwaden 5, Anwelken, Trocknen, Rechen, Schwadernte 6, Transportieren 7 und/oder Einsilieren 8 umfassen. Weiterhin erzeugt die Recheneinheit 13 des Assistenzsystems 11 Anweisungen, die die durchzuführenden Prozessschritte 2 zur Herstellung der Silage mit dem oder den vorgegebenen Silagequalitätsparametern betreffen. Das Ermitteln der erforderlichen Prozessschritte 2 und das Erzeugen entsprechender Anweisungen betreffend die ermittelten durchzuführenden Prozessschritte 2 wird vorzugsweise automatisch mittels der Recheneinheit 13 des Assistenzsystems 11 durchgeführt, sobald die Bedienperson 15 den oder die gewünschten Silagequalitätsparameters über die Ein-Ausgabeeinheit 12 vorgegeben hat.

Um die komplexe Abhängigkeit des Futterernteprozesses 1 bzw. der Futterernteprozesskette 9 von veränderlichen Bedingungen während der Abarbeitung der Futterernteprozesskette 9 berücksichtigen zu können, basiert das Ermitteln der durchzuführenden Prozessschritte 2 auf einem Silageherstellungsmodell 18. Das Silageherstellungsmodell 18 ist in der Speichereinheit 14 des Assistenzsystems 11 hinterlegt bzw. abgespeichert. Das Silageherstellungsmodell 18 definiert eine Abhängigkeit des mindestens einen vorgegebenen Silagequalitätsparameters von mindestens einem die Herstellung der Silage mit dem mindestens einen vorgegebenen Silagequalitätsparameters beeinflussenden Prozessparameter 17.

Das Silageherstellungsmodell 18 zeichnet sich dadurch aus, dass dieses die komplexen Abhängigkeiten verschiedener Prozessparameter 17 voneinander sowie im Hinblick auf den oder die verschiedenen Silagequalitätsparameter definiert. Durch die modellierten Abhängigkeiten von verschiedenen nicht beeinflussbaren und/oder beeinflussbaren Prozessparametern 17 kann die Recheneinheit die Planung einer idealen Futterernteprozesskette 9 vornehmen und die entsprechenden Anweisungen für die einzelnen Prozessschritte 2 erzeugen. Um die verschiedenen Abhängigkeiten zwischen den Prozessparametern 17 und den vorgebaren Silagequalitätsparametern abbilden zu können, kann das Silageherstellungsmodell 18 beispielsweise auf verschiedenen Exponentialfunktion beruhen, welche wiederum einzelne Abhängigkeiten anhand von thermodynamischen Gesetzmäßigkeiten definieren. Das Silageherstellungsmodell 18 kann gleichermaßen ein lernfähiges, auf künstlicher Intelligenz basierendes, Silageherstellungsmodell 18 sein. Beispielsweise kann das Silageherstellungsmodell 18 auf künstlichen neuronalen Netzen, genetischen Algorithmen, Bayes'schen Netzen oder ähnlichen Ansätzen basieren, mittels derer die Abhängigkeiten der Prozessparameter 17 voneinander und im Hinblick auf die vorgebaren Silagequalitätsparameter modelliert werden und das Silageherstellungsmodell 18 lernfähig machen.

Das Ermitteln von durchzuführenden Prozessschritten 2 zur Herstellung der Silage mit dem oder den vorgegebenen Silagequalitätsparametern und entsprechend das Erzeugen von Anweisungen betreffend die durchzuführenden Prozessschritte 2 kann beispielsweise anhand von auszuführenden Regeln, sogenannten Rules, erfolgen. So ist es beispielsweise vorstellbar, dass die Recheneinheit 13 anhand des Silageherstellungsmodells 18 berechnete, ermittelte bzw. bestimmte Prozessparameter 17 mit in der Speichereinheit 14 des Assistenzsystems 11 hinterlegten definierten Sollwerten für diese Prozessparameter 17 vergleicht und abhängig von dem Vergleichsergebnis die erforderlichen Prozessschritte 2 für die Herstellung der Silage und entsprechende Anweisungen für diese Prozessschritte 2 ermittelt und zwar indem verschiedene in der Speichereinheit 14 Assistenzsystems 11 hinterlegte Regeln, rules, abgearbeitet bzw. ausgeführt werden. Die Recheneinheit 13 kann hierfür entsprechende Bausteine wie beispielsweise eine Rule-Interpreter oder dergleichen umfassen. Andere Verfahren bzw. Herangehensweisen für die Ermittlung der durchzuführenden Prozessschritte 2 und entsprechende Anweisungen für diese Prozessschritte 2 sind gleichermaßen möglich.

Die Prozessparameter 17, auf denen das Silageherstellungsmodell 18 beruht bzw. die dem Silageherstellungsmodell 18 zugrunde gelegt werden, können fixe oder veränderliche Parameter sein, die wiederum beeinflussbar oder unbeeinflussbar sind. Die verschiedenen Prozessparameter 17 können in der Speichereinheit 14 des Assistenzsystems 11 hinterlegt sein, sensorisch erfasst werden und/oder mittels der Recheneinheit 13 des Assistenzsystems 11 ermittelt bzw. berechnet werden. Die für Erfassung der Prozessparameter 17 erforderliche Sensorik kann beispielsweise an den landwirtschaftlichen Maschinenanordnungen 10 angebracht sein und/oder eine maschinenanordnungsferne Sensorik, beispielsweise eine an einer Drohne 19 angebrachte Sensorik, sein. Im Rahmen der Ermittlung bzw. Berechnung von Prozessparametern 17 kann beispielsweise vorgesehen sein, dass verschiedene in der Speichereinheit 14 hinterlegte Prozessparameter 17, die gegebenenfalls zuvor sensorisch erfasst wurden, zu einem weiteren Prozessparameter 17 verrechnet werden. Weiterhin kann es vorgesehen sein, dass Prozessparameter 17 im Rahmen der Ermittlung der durchzuführenden Prozessschritte 2 unter Zugrundelegung des Silageherstellungsmodell 18 bestimmt bzw. berechnet werden. Die Prozessparameter 17 können weiterhin wahlweise vor, während oder nach einer Bearbeitung der landwirtschaftlichen Fläche generiert werden oder aber als historische Prozessparameter 17 in der Speichereinheit 14 des Assistenzsystems 11 bereitstehen. Historische Prozessparameter 17 schließen dabei auch Prozessparameter 17 ein, die aus einem Vorjahr stammen.

Prozessparameter 17 können beispielsweise erntegutspezifische Parameter 20, maschinenanordnungsspezifische Parameter 21, betriebsmittelspezifische Parameter 22 und/oder Umweltparameter 23 sein. Erntegutspezifische Parameter 20 spezifizieren beispielsweise eine Erntegutsorte, einen Trockensubstanzgehalt des Ernteguts, einen Blattflächenindex des Ernteguts, einen stomatären Widerstand des Ernteguts, eine Wachsschicht des Ernteguts, eine Bestandsdichte des Ernteguts, eine Bestandshöhe des Ernteguts, eine Stoppelhöhe, eine Schwaddichte des Ernteguts, eine Schwadhöhe des Ernteguts und/oder eine Schwadbreite des Ernteguts. Maschinenanordnungsspezifische Parameter 21 spezifizieren Einstellungen von Arbeitsaggregaten der landwirtschaftlichen Maschinenanordnungen 10, die für die Durchführung der Prozessschritte 2 einer Futterernteprozesskette 9 zur Herstellung von Silage mit dem oder den vorgegebenen Silagequalitätsparametern erforderlich sind. So spezifizieren die maschinenordnungsspezifischen Parameter 21 beispielsweise Einstellungen von Arbeitsaggregaten von Arbeitsmaschinen und/oder Erntemaschinen, wie beispielsweise von Traktoren, Feldhäckslern, Teleskopladern, und/oder Radladern. Weiterhin spezifizieren maschinenanordnungsspezifische Parameter 21 beispielsweise Einstellungen von Arbeitsaggregaten von Anbaugeräten, wie beispielsweise von Mähwerken, Wendern, Schwadern, Pick-ups, Transportwagen und/oder Ballenpressen. Betriebsmittelspezifische Parameter 22 spezifizieren beispielsweise Siliermittel, Wickelmaterialien und/oder Silos. Umweltparameter 23 spezifizieren beispielsweise eine Bodenart, eine Bodenfeuchte, eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung.

Die Bestimmung einiger der Prozessparameter 17 kann ebenfalls auf Modellen beruhen. So ist beispielsweise der Trockensubstanzgehalt des Ernteguts, der im Silageherstellungsmodell 18 berücksichtigt werden kann oder wird, abhängig von einer Trocknungsrate von Erntegut auf einer landwirtschaftlichen Fläche. Hierzu wird ausgehend von einem initialen bestimmten, der in der Speichereinheit 14 des Assistenzsystems 11 hinterlegt sein kann, Trockensubstanzgehalt anhand einer über ein Modell prognostizierten Trocknungsrate ein Trockensubstanzgehalt des Erntegut entlang des Futterernteprozesses 1 prognostiziert. Für die Vorhersage des Trockensubstanzgehalts kann eine entsprechende von der Recheneinheit 13 anzuwendende Verarbeitungsvorschrift in der Speichereinheit 14 hinterlegt bzw. abgespeichert sein. Die Trocknungsrate des Ernteguts auf der landwirtschaftlichen Fläche ist wiederum abhängig von verschiedenen anderen Prozessparametern 17, insbesondere erntegutspezifischen Parametern 20 und/oder Umweltparametern 23. Die Recheneinheit 13 greift auf ein in der Speichereinheit 14 des Assistenzsystems 11 hinterlegtes bzw. abgespeichertes Feldtrocknungsmodells 24 zurück. Das Feldtrocknungsmodell 24 kann ein empirisches oder aber ein physikalisches Feldtrocknungsmodell 24 sein. Das Feldtrocknungsmodell 24 definiert die Trocknungsrate von Erntegut auf einer landwirtschaftlichen Fläche abhängig von mindestens einem der zuvor genannten Prozessparameter 17, vorzugsweise von mindestens einem der erntegutspezifischen Parameter 20 und/oder mindestens einem der Umweltparameter 23. Vorzugsweise basiert das Feldtrocknungsmodell 24 auf mindestens einer auf einer thermodynamischen Gesetzmäßigkeit beruhenden Exponentialfunktion, welche einen Zusammenhang der Trocknungsrate von dem mindestens einen Prozessparameter 17, insbesondere dem mindestens einen erntegutspezifischen Parameter 20 und/oder dem mindestens einen Umweltparameter 23, beschreibt. Das Feldtrocknungsmodell 24 kann gleichermaßen, wie auch das Silageherstellungsmodell 18, ein lernfähiges, auf künstlicher Intelligenz basierendes, Feldtrocknungsmodell 24 sein. Beispielsweise kann das Feldtrocknungsmodell 24 auf künstlichen neuronalen Netzen, genetischen Algorithmen, Bayes'schen Netzen oder ähnlichen Ansätzen basieren, mittels derer die Abhängigkeit der Trocknungsrate von dem mindestens einen Prozessparameter 17, insbesondere dem mindestens einen erntegutspezifischen Parameter 20 und/oder dem mindestens einen Umweltparameter 23, modelliert wird und das Feldtrocknungsmodell 24 lernfähig machen.

In der Speichereinheit 14 des Assistenzsystems 11 kann nicht nur ein Feldtrocknungsmodell 24 hinterlegt sein, sondern auch zwei oder mehr Feldtrocknungsmodelle 24. Diese Feldtrocknungsmodelle 24 sind hinsichtlich verschiedener Erntegutbedingungen definiert. Beispielsweise können in der Speichereinheit 14 verschiedene Feldtrocknungsmodelle 24 für verschiedene Erntegutsorten bzw. Feldfrüchte hinterlegt sein. Vorzugsweise sind verschiedene Feldtrocknungsmodelle 24 für verschiedene definierte Schwadbreiten von im Schwad abgelegten Erntegut in der Speichereinheit 14 hinterlegt.

Das Ermitteln der durchzuführenden Prozessschritte 2 einer Futterernteprozesskette 9 zur Herstellung der Silage mit dem oder den vorgegebenen Silagequalitätsparametern kann verschiedene Teilaspekte umfassen. So kann beispielsweise die Reihenfolge der durchzuführenden Prozessschritte 2, ein Beginn- sowie Endzeitpunkt für die Durchführung der Prozessschritte 2, eine Dauer zwischen den durchzuführenden Prozessschritten 2, ein oder mehrere für die Durchführung der Prozessschritte 2 benötigte Prozessteilnehmer, eine oder mehrere für die Durchführung der Prozessschritte 2 benötigte Prozessressourcen und/oder Einstellungen und/oder Mengen der für die Durchführung der Prozessschritte 2 benötigten Prozessteilnehmer und/oder Prozessressourcen ermittelt werden. Gleichermaßen kann das Erzeugen von Anweisungen, welche die ermittelten durchzuführenden Prozessschritte 2 betreffen, gleichermaßen verschiedene Teilaspekte umfassen. So können beispielsweise Anweisungen betreffend die Reihenfolge der durchzuführenden Prozessschritte 2, den Beginnsowie Endzeitpunkt für die Durchführung der Prozessschritte 2, die Dauer zwischen den durchzuführenden Prozessschritten 2, den einen oder die mehreren für die Durchführung der Prozessschritte 2 benötigten Prozessteilnehmer, die eine oder die mehreren für die Durchführung der Prozessschritte 2 benötigten Prozessressourcen und/oder Einstellungen und/oder Mengen der für die Durchführung der Prozessschritte 2 benötigten Prozessteilnehmer und/oder Prozessressourcen erzeugt werden. Prozessteilnehmer sind die beschriebenen landwirtschaftlichen Maschinenanordnungen 10, also Gespanne aus einem landwirtschaftlichen Zugfahrzeug, beispielsweise einem Traktor, und adaptierten Anbaugerät, beispielsweise einem Mähwerk, Wender, Schwader oder dergleichen, und/oder landwirtschaftliche Erntemaschinen, beispielsweise ein Feldhäcksler, die für die Durchführung der Prozessschritte 2 erforderlich sind. Prozessressourcen sind hingegen Betriebsmittel, wie beispielsweise Siliermittel, Wickelmaterialien und/oder Silos, die für die Durchführung der Prozessschritte 2 erforderlich sind.

Ändert sich der oder die vorgegebenen Silagequalitätsparameters, beispielsweise aufgrund einer Fehleingabe durch die Bedienperson 15 oder aber aufgrund einer Änderung in der Nutzung der Silage, werden die durchzuführenden Prozessschritte 2 und die entsprechenden Anweisungen erneut mittels der Recheneinheit 13 des Assistenzsystems 11 ermittelt und erzeugt bzw. entsprechend im Hinblick auf die Änderung aktualisiert. Gleiches gilt auch bei der Änderung eines oder mehrerer der Prozessparameter 17. Eine solche Änderung kann jederzeit unvorhersehbar auftreten, die Recheneinheit 13 ist in der Lage die ermittelte Futterernteprozesskette 9 im Hinblick auf diese Änderung neu auszurichten. Beispielsweise kann die Reihenfolge von Prozessschritten 2 geändert werden, können Prozessschritte 2 aus der Futterernteprozesskette 9 entfernt werden und/oder in diese hinzugefügt werden, die Dauer zwischen verschiedenen Prozessschritten 2 verändert werden, die Art und/oder Menge an Prozessressourcen, also Betriebsmitteln, angepasst werden und/oder andere Änderungen dergleichen vorgenommen werden. Dies erfolgt vorzugsweise automatisch, wenn eine Änderung des oder der Silagequalitätsparameter und/oder eines oder mehrerer Prozessparameter 17 festgestellt wird. Gleichermaßen ist vorstellbar, dass, sofern eine Änderung systemseitig festgestellt wird, die Bedienperson 15 einen Hinweis über die Anzeigeeinheit 16 erhält und die Anpassungen über eine Eingabe mittels der Ein-Ausgabeeinheit 12 des Assistenzsystems 11 initiiert.

Im Rahmen der Erzeugung von Anweisungen betreffend die durchzuführenden Prozessschritte 2 einer Futterernteprozesskette 9 zur Herstellung der Silage mit dem oder den vorgegebenen Silagequalitätsparametern kann auch ein Anzeigen der erzeugten Anweisungen mittels der Anzeigeeinheit 16 vorgesehen sein. Die Bedienperson 15 gelangt hierdurch in Kenntnis der durchzuführenden Prozessschritte 2 der spezifischen Futterernteprozesskette 9, einschließlich etwaiger Prozessparameter 17, und kann basierend auf dieser Informationslage die ideale Futterernteprozesskette 9, die sicherstellt, dass Silage mit dem oder den gewünschten Silagequalitätsparametern erhalten wird, abarbeiten. Gleichermaßen kann mit der Erzeugung von Anweisungen ein Übermitteln der erzeugten Anweisungen an einen oder mehrere für die Durchführung der Prozessschritte 2 benötigten Prozessteilnehmer, also einer oder mehrerer landwirtschaftlicher Maschinenanordnungen 10, erfolgen. Das Übermitteln der Anweisung erfolgt in Form von spezifischen Steuersignalen und oder Daten an entsprechende Fahrerassistenzsysteme 25 der landwirtschaftlichen Maschinenanordnungen 10 zur Ansteuerung der verschiedenen Arbeitsaggregate. Eine solche Ausgestaltung ist insbesondere im Kontext von selbstfahrenden und/oder autonomen landwirtschaftlichen Maschinenanordnungen 10 von Relevanz. Insbesondere für diese Ausgestaltung ist es von Vorteil, dass das Assistenzsystems 11 bzw. die Recheneinheit 13 des Assistenzsystems 11 dazu eingerichtet ist, abhängig von den ermittelten durchzuführenden Prozessschritte 2 die erforderlichen landwirtschaftlichen Maschinenanordnungen 10, insbesondere deren Fahrerassistenzsysteme 25, als Prozessteilnehmer in das Netzwerk des Assistenzsystems 11 zu integrieren. Hierdurch wird ein Datenaustausch zwischen den das Netzwerk ausbildenden Einrichtungen 10, 12, 13, 14, 15 und 25 möglich. Die landwirtschaftlichen Maschinenanordnungen 10 können als Regelautomaten ausgeführt sein, die von der Recheneinheit 13 des Assistenzsystems 11 abhängig von den durchzuführenden Prozessschritten 2 angesteuert werden, wodurch eine automatisierte Einstellung der entsprechenden Arbeitsaggregate der landwirtschaftlichen Maschinenanordnungen 10 erfolgt.

Neben dem Silageherstellungsmodell 18 können von der Recheneinheit 13 des Assistenzsystems 11 im Rahmen der Ermittlung der durchzuführenden Prozessschritte 2 eine oder mehrere Anwendungsstrategien und/oder Optimierungsstrategien herangezogen werden. Vorzugsweise werden die Anwendungsstrategien und/oder Optimierungsstrategien durch die Bedienperson 15 vor oder nach Vorgabe des oder der Silagequalitätsparameter mittels der Ein-Ausgabeeinheit 12 des Assistenzsystems 11 vorgegeben. Die verschiedenen Anwendungsstrategien und/oder Optimierungsstrategien sind in der Speichereinheit 14 des Assistenzsystems 11 hinterlegt und werden nach Auswahl bzw. Vorgabe durch die Bedienperson 15 von der Recheneinheit 13 aufgerufen bzw. ausgeführt und somit der Ermittlung der durchzuführenden Prozessschritte 2 zugrunde gelegt. Als vorgebare bzw. auswählbare Anwendungsstrategien stehen in der Speichereinheit 14 des Assistenzsystems 11 beispielsweise die Anwendungsstrategien "Silage für Biogasgewinnung" und "Silage für Tierfütterung" zur Verfügung. Diese Anwendungsstrategien definieren eine Abhängigkeit der Ermittlung der durchzuführenden Prozessschritte 2 von der entsprechenden Nutzung der Silage. Als vorgebare bzw. auswählbare Optimierungsstrategien steht in der Speichereinheit 13 des Assistenzsystems 11 beispielsweise die Optimierungsstrategie "Siliermittel" zur Verfügung, die die Menge an Siliermittel, die für die Herstellung der Silage mit dem oder den vorgegebenen Silagequalitätsparametern benötigt wird, optimiert. Die Ermittlung der durchzuführenden Prozessschritte 2 mittels der Recheneinheit 13 des Assistenzsystems 11 erfolgt bei der Auswahl der Optimierungsstrategien "Siliermittel" derart, dass die Silage nach Möglichkeit ohne die Verwendung von Siliermittel oder nur mit möglichst geringen, erforderlichen Mengen an Siliermittel erhalten wird.

Aus den ermittelten Prozessschritten 2, den entsprechenden Anweisungen und/oder Prozessparametern 17 einer auf den Erhalt von Silage mit dem oder den vorgegebenen Silagequalitätsparametern hin ausgerichteten idealen Futterernteprozesskette 9 kann eine sogenannte Feldbearbeitungskarte 26 mittels der Recheneinrichtung 13 des Assistenzsystems 11 generiert werden, die in der Speichereinheit 14 des Assistenzsystems 11 hinterlegt bzw. abgespeichert wird. Diese Feldbearbeitungskarte 26 kann bei einer Änderung des oder der Silagequalitätsparameter und/oder Prozessparameter 17 entsprechend aktualisiert werden und der Bedienperson 15 über die Anzeigeeinheit 16 angezeigt werden.

Es besteht weiterhin die Möglichkeit sogenannte Bearbeitungsprofile für die landwirtschaftlichen Maschinenanordnungen 10 zu generieren, sodass für landwirtschaftliche Maschinenanordnungen 10 eine flächenspezifische und prozessabhängige Bearbeitungscharakteristik zur Herstellung von Silage mit einem oder mehreren vorgegebenen Silagequalitätsparametern vorliegt. Hierzu werden während der Bearbeitung der landwirtschaftlichen Fläche durch die landwirtschaftlichen Maschinenanordnungen 10 in Abhängigkeit der Prozessschritte 2 einer idealen Futterernteprozesskette 9 Positionsdaten 27 der landwirtschaftlichen Maschinenanordnungen 10 auf der landwirtschaftlichen Fläche mittels einer geeigneten Sensorik generiert. Beispielsweise können die Positionsdaten 27 über eine - in den FIGs. nicht dargestellte - Positionsbestimmungseinrichtung, die Teil der Fahrerassistenzsysteme 25 der landwirtschaftlichen Maschinenanordnung 10 ist oder mit dem Assistenzsystem 11 und einem Satelliten 28 kommuniziert, fortwährend aufgezeichnet werden. Diese Positionsdaten 27 werden von der Recheneinheit 13 des Assistenzsystems 11 mit der Feldbearbeitungskarte 26 gemeinsam zu Bearbeitungsprofilen für die landwirtschaftlichen Maschinenanordnungen 10 kombiniert, welche in der Speichereinheit 14 des Assistenzsystems 11 hinterlegt werden. Die Positionsdaten 27 der landwirtschaftlichen Maschinenanordnungen 10 werden dabei vorzugsweise einem jeweiligen durchgeführten Prozessschritt 2 und einer Zeit zugeordnet, beispielsweise indem die Positionsdaten 27 mit einem oder mehreren spezifischen digitalen Marker versehen werden. Hierdurch sind die Positionsdaten 27 in den Bearbeitungsprofilen für die landwirtschaftlichen Maschinenanordnungen 10 unmittelbar mit den Prozessschritten 2, Anweisungen und/oder Prozessparameter 17 des ideal ausgelegten Futterernteprozesses 1 bzw. der ideal ausgelegten Futterernteprozesskette 9 verknüpft.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Futterernteprozess
- 2: Prozessschritte
- 3: Prozessschritt Mähen
- 4: Prozessschritt Wenden oder Zetten
- 5: Prozessschritt Schwaden
- 6: Prozessschritt Schwadernte
- 7: Prozessschritt Transportieren
- 8: Prozessschritt Einsilieren
- 9: Futterernteprozesskette
- 10: Landwirtschaftliche Maschinenanordnung
- 11: Assistenzsystem
- 12: Ein-Ausgabeeinheit
- 13: Recheneinheit
- 14: Speichereinheit
- 15: Bedienperson
- 16: Anzeigeeinheit
- 17: Prozessparameter
- 18: Silageherstellungsmodell
- 19: Drohne
- 20: Erntegutspezifischer Parameter
- 21: Maschinenanordnungsspezifische Parameter
- 22: Betriebsmittelspezifischer Parameter
- 23: Umweltparameter
- 24: Feldtrocknungsmodell
- 25: Fahrerassistenzsystem
- 26: Feldbearbeitungskarte
- 27: Positionsdaten
- 28: Satellit

## Patentansprüche

1. Verfahren zur Absicherung der Qualität von Silage mittels eines Assistenzsystems (11), welches eine Ein-Ausgabeeinheit (12), eine Recheneinheit (13) und eine Speichereinheit (14) umfasst, die gemeinsam ein Netzwerk zur Übertragung von Daten ausbilden, **dadurch gekennzeichnet, dass** das Verfahren die folgenden Verfahrensschritte umfasst:
a) mittels der Ein-Ausgabeeinheit (12), Vorgeben mindestens eines Silagequalitätsparameters durch eine Bedienperson (15);
b) mittels der Recheneinheit (13), Ermitteln von durchzuführenden Prozessschritten (2) einer Futterernteprozesskette (9) zur Herstellung von Silage mit dem mindestens einen vorgegebenen Silagequalitätsparameter; und
c) mittels der Recheneinheit (13), Erzeugen von Anweisungen betreffend die durchzuführenden Prozessschritte (2) zur Herstellung der Silage mit dem mindestens einen vorgegebenen Silagequalitätsparameter,
wobei das Ermitteln der durchzuführenden Prozessschritte (2) zur Herstellung der Silage mit dem mindestens einen vorgegebenen Silagequalitätsparameter auf einem Silageherstellungsmodell (18), welches in der Speichereinheit (14) hinterlegt ist, basiert, wobei das Silageherstellungsmodell (18) eine Abhängigkeit des mindestens einen vorgegebenen Silagequalitätsparameters von mindestens einem die Herstellung der Silage mit dem mindestens einen vorgegeben Silagequalitätsparameter beeinflussenden Prozessparameter (17) definiert.

2. Verfahren nach Anspruch 1, **dadurch gekennzeichnet, dass** der Verfahrensschritt b) das Ermitteln einer Reihenfolge der durchzuführenden Prozessschritte (2), eines Beginn- sowie Endzeitpunkts für die Durchführung der Prozessschritte (2), einer Dauer zwischen den durchzuführenden Prozessschritten (2), eines oder mehrerer für die Durchführung der Prozessschritte (2) benötigten Prozessteilnehmer, einer oder mehrerer für die Durchführung der Prozessschritte (2) benötigter Prozessressourcen und/oder von Einstellungen und/oder Mengen der einen oder mehreren für die Durchführung der Prozessschritte (2) benötigten Prozessteilnehmer und/oder Prozessressourcen umfasst.

3. Verfahren nach Anspruch 2, **dadurch gekennzeichnet, dass** der Verfahrensschritt c) das Erzeugen von Anweisungen betreffend die Reihenfolge der durchzuführenden Prozessschritte (2), den Beginn- sowie Endzeitpunkt für die Durchführung der Prozessschritte (2), die Dauer zwischen den durchzuführenden Prozessschritten (2), den einen oder die mehreren für die Durchführung der Prozessschritte (2) benötigten Prozessteilnehmer, die eine oder die mehreren für die Durchführung der Prozessschritte (2) benötigten Prozessressourcen und/oder die Einstellungen und/oder die Mengen der einen oder mehreren für die Durchführung der Prozessschritte (2) benötigten Prozessteilnehmer und/oder Prozessressourcen umfasst.

4. Verfahren nach Anspruch 2 oder 3, **dadurch gekennzeichnet, dass** die eine oder die mehreren benötigten Prozessteilnehmer landwirtschaftliche Maschinenanordnungen (10), insbesondere Gespanne aus landwirtschaftlichem Zugfahrzeug und adaptierten Anbaugerät, landwirtschaftliche Erntemaschinen oder dergleichen, sind und die eine oder die mehreren benötigten Prozessressourcen Betriebsmittel sind.

5. Verfahren nach Anspruch 3 oder 4, **dadurch gekennzeichnet, dass** der Verfahrensschritt c) ein Anzeigen der erzeugten Anweisungen mittels einer mit dem Assistenzsystem (11) zur Übertragung von Daten kommunizierenden Anzeigeeinheit (16) und/oder ein Übermitteln der erzeugten Anweisungen, insbesondere von Steuersignalen und/oder Daten, an den einen oder die mehreren für die Durchführung der Prozessschritte (2) benötigten Prozessteilnehmer umfasst.

6. Verfahren nach einem der Ansprüche 1 bis 5, **dadurch gekennzeichnet, dass** die in dem Verfahrensschritt b) ermittelten durchzuführenden Prozessschritte (2) die Prozessschritte (2) Mähen (3), Aufbereiten, Wenden (4), Schwaden (5), Anwelken, Trocknen, Rechen, Schwadernte (6), Transportieren (7) und/oder Einsilieren (8) von Erntegut umfassen.

7. Verfahren nach einem der Ansprüche 1 bis 6, **dadurch gekennzeichnet, dass** der mindestens eine Silagequalitätsparameter ein Trockensubstanzgehalt, ein Zuckergehalt, ein Stärkegehalt, ein pH-Wert, ein Rohproteingehalt, ein Rohfasergehalt, ein Rohaschegehalt, eine Energiedichte, ein Nährstoffgehalt, eine Schnittlänge und/oder ein Säuregehalt ist.

8. Verfahren nach einem der Ansprüche 1 bis 7, **dadurch gekennzeichnet, dass** der mindestens eine Prozessparameter (17) in der Speichereinheit (14) des Assistenzsystems (11) hinterlegt ist, sensorisch erfasst wird und/oder mittels der Recheneinheit (13) des Assistenzsystems (11) ermittelt wird.

9. Verfahren nach einem der Ansprüche 1 bis 8, **dadurch gekennzeichnet, dass** die Verfahrensschritte b) und c) bei einer Änderung des mindestens einen Silagequalitätsparameters und/oder bei einer Änderung des mindestens einen Prozessparameters (17) erneut mittels der Recheneinheit (13) des Assistenzsystems (11) ausgeführt werden.

10. Verfahren nach einem der Ansprüche 1 bis 9, **dadurch gekennzeichnet, dass** der mindestens eine Prozessparameter (17) ein erntegutspezifischer Parameter (20), ein maschinenanordnungsspezifischer Parameter (21), ein betriebsmittelspezifischer Parameter (22) und/oder ein Umweltparameter (23) ist.

11. Verfahren nach Anspruch 10, **dadurch gekennzeichnet, dass**
der erntegutspezifische Parameter (20) eine Erntegutsorte, einen Trockensubstanzgehalt des Ernteguts, einen Blattflächenindex des Ernteguts, einen stomatären Widerstand des Ernteguts, eine Wachsschicht des Ernteguts, eine Bestandsdichte des Ernteguts, eine Bestandshöhe des Ernteguts, eine Stoppelhöhe, eine Schwaddichte des Ernteguts, eine Schwadhöhe des Ernteguts und/oder eine Schwadbreite des Ernteguts spezifiziert;
der maschinenanordnungsspezifische Parameter (21) Einstellungen von Arbeitsaggregaten von Arbeitsmaschinen und/oder Erntemaschinen, insbesondere von Traktoren, Feldhäckslern, Teleskopladern und/oder Radladern, und/oder Einstellungen von Arbeitsaggregaten von Anbaugeräten, insbesondere von Mähwerken, Wendern, Schwadern, Pick-ups, Transportwagen und/oder Ballenpressen spezifiziert;
der betriebsmittelspezifische Parameter (22) Siliermittel, Wickelmaterialien und/oder Silos spezifiziert; und/oder
der Umweltparameter (23) eine Bodenart, eine Bodenfeuchte, eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung spezifiziert.

12. Verfahren nach Anspruch 11, **dadurch gekennzeichnet, dass** der Trockensubstanzgehalt des Ernteguts in Abhängigkeit eines empirischen oder physikalischen Feldtrocknungsmodells (24) mittels der Recheneinheit (13) des Assistenzsystems (11) bestimmt wird, wobei das Feldtrocknungsmodell (24) eine Abhängigkeit einer Trocknungsrate von Erntegut auf einer landwirtschaftlichen Fläche von mindestens einem der Prozessparameter (17), insbesondere von einem der erntegutspezifischen Parameter (20) und/oder einem der Umweltparameter (23), definiert.

13. Verfahren nach einem der Ansprüche 1 bis 12, **dadurch gekennzeichnet, dass** der Verfahrensschritt b) mittels der Recheneinheit (13) des Assistenzsystems (11) unter Anwendung mindestens einer in der Speichereinheit (14) des Assistenzsystems (11) hinterlegten Anwendungsstrategie und/oder Optimierungsstrategie durchgeführt wird.

14. Verfahren nach Anspruch 13, **dadurch gekennzeichnet, dass** die mindestens eine Anwendungsstrategie eine Anwendungsstrategie "Silage für Biogasgewinnung" oder eine Anwendungsstrategie "Silage für Tierfütterung", umfasst, wobei die Anwendungsstrategien "Silage für Biogasgewinnung" oder "Silage für Tierfütterung" das Ermitteln der durchzuführenden Prozessschritte (2) abhängig von der entsprechenden Nutzung der Silage machen, wobei die mindestens eine anwendbare Optimierungsstrategie eine Optimierungsstrategie "Siliermittel" umfasst, wobei die Optimierungsstrategie "Siliermittel" die Menge an Siliermittel, die für die Herstellung der Silage mit dem vorgegebenen Silagequalitätsparameter benötigt wird, optimiert.

15. Verfahren nach Anspruch 13 oder 14, **dadurch gekennzeichnet, dass** der Verfahrensschritt a) ein Vorgeben der mindestens einen Anwendungsstrategie und/oder Optimierungsstrategie durch die Bedienperson (15) mittels der Ein-Ausgabeeinheit (12) des Assistenzsystems (11) umfasst.

16. Verfahren nach einem der Ansprüche 1 bis 15, **dadurch gekennzeichnet, dass** die Verfahrensschritte b) und c) mittels der Recheneinheit (13) des Assistenzsystems (11) nach Verfahrensschritt a) automatisch ausgeführt werden.

17. Assistenzsystem (11) zur Durchführung des Verfahrens nach einem der Ansprüche 1 bis 16, wobei das Assistenzsystem (11) eine Ein-Ausgabeeinheit (12), eine Recheneinheit (13) und eine Speichereinheit (14) umfasst, die gemeinsam ein Netzwerk zur Übertragung von Daten ausbilden, **dadurch gekennzeichnet, dass** die Recheneinheit (13) dazu eingerichtet ist, in Abhängigkeit der im Verfahrensschritt b) ermittelten durchzuführenden Prozessschritte (2) die für die Durchführung der Prozessschritte (2) erforderlichen landwirtschaftlichen Maschinenanordnungen (10), insbesondere die Fahrerassistenzsysteme (25) der landwirtschaftlichen Maschinenanordnungen (10), als Prozessteilnehmer in das Netzwerk zu integrieren.

18. Assistenzsystem (11) nach Anspruch 17, **dadurch gekennzeichnet, dass** die für die Durchführung der Prozessschritte (2) erforderlichen landwirtschaftliche Maschinenanordnungen (10) als Regelautomaten, insbesondere Arbeitsmaschinenautomaten, Erntemaschinenautomaten, Mähwerkautomaten, Wenderautomaten, Schwaderautomaten, Transportfahrzeugautomaten und Ballenpressenautomaten, ausgeführt sind, wobei die Recheneinheit (13) des Assistenzsystems (11) dazu eingerichtet ist, die jeweiligen Regelautomaten abhängig von den durchzuführenden Prozessschritten (2) zu steuern.
